# EUROPÄISCHE PATENTSCHRIFT

(11) **EP 0 707 190 B1**
(45) Veröffentlichungstag und Bekanntmachung des Hinweises auf die Patenterteilung: **09.12.1998**
(21) Anmeldenummer: 95112743.0
(22) Anmeldetag: 12.08.1995
(51) Int. Cl.: G01B 7/04, G01D 5/14

(54) **Positionsmessstrecke**
Distance position measurement
Mesure de la distance d'une position

(30) Priorität: 12.10.1994 DE 4436382; 22.04.1995 DE 19514891
(43) Veröffentlichungstag der Anmeldung: 17.04.1996
(73) Patentinhaber: FESTO AG & Co, 73734 Esslingen (DE)
(72) Erfinder: Reininger,Thomas, Dr., D-73249 Wernau (DE); Höhn, Ralf, D-70597 Stuttgart (DE); Medow, Ralf, D-73728 Esslingen (DE); Kovacs, Gabor, Dr., D-73734 Esslingen (DE)
(74) Vertreter: Vetter, Hans, Dipl.-Phys. Dr.

(56) Entgegenhaltungen:
- WO-A-94/08203
- DE-A- 4 109 329
- US-A- 4 857 842

## Beschreibung

Die Erfindung betrifft eine Positionsmeßstrecke mit einer als Meßspule ausgebildeten, langgestreckten Sekundärspule, an deren Endbereichen jeweils gegensinnig mit einer Wechselspannung beaufschlagbare Primärspulen angeordnet sind, und mit einem entlang der Sekundärspule verschiebbaren Permanentmagneten.

Derartige Positionsmeßstrecken sind im Handel als sogenannte PLCD-Wegmeßsysteme (Permanentmagnetic Linear Contactless Displacement Sensor) erhältlich und werden beispielsweise von der Firma VAC vertrieben. Derartige Positionsmeßstrecken werden oft nur an einem lokal begrenzten Bereich beispielsweise einer Kolben-Zylinder-Anordnung angebracht, um in diesem begrenzten Bereich die Position des Kolbens zu erfassen. Die Länge der Positionsmeßstrecke kann daher durchaus kleiner sein als die des Kolbenhubs oder eines sonstigen bewegbaren Elements, an dem der Permanentmagnet angeordnet ist. Ein Problem besteht nun darin, daß an den Rändern der Positionsmeßstrecke Störungen und Abweichungen von der ansonst vorliegenden Linearität auftreten, die unerwünscht sind. Weiterhin besteht das Problem, daß bei einer Mittenposition des Permanentmagneten zwischen den Primärspulen ein Sensorsignal 0 vorliegt, wie dies auch außerhalb der Meßstrecke der Fall ist. Das Meßergebnis ist insoweit nicht eindeutig.

Eine Aufgabe der vorliegenden Erfindung besteht darin, die eingangs genannte Positionsmeßstrecke so zu verbessern, daß eine Mehrdeutigkeit des Meßergebnisses vermieden und Meßwerte außerhalb des linearen Bereichs der Meßstrecke unbeachtet bleiben können.

Diese Aufgabe wird erfindungsgemäß dadurch gelöst, daß zwei Magnetfeldsensoren zwischen den Primärspulen im Bereich der Sekundärspule und in Längsrichtung beabstandet von deren Enden angeordnet sind, und daß eine mit den Magnetfeldsensoren verbundene, ein Meßsignal an der Sekundärspule nur bei einer Position des Permanentmagneten zwischen den Magnetfeldsensoren als Positionssignal wertende elektronische Bereichserkennungseinrichtung vorhanden ist.

Durch die Bereichserkennungseinrichtung kann erkannt werden, ob sich der Permanentmagnet zwischen den Magnetfeldsensoren oder außerhalb dieses Bereichs befindet. Nur bei einer Position innerhalb dieses Bereichs wird das Meßsignal als Positionssignal gewertet. Dadurch werden zum einen die nicht line-aren Randbereiche der Meßstrecke ausgeblendet und zum anderen kann die Mittenposition des Permanentmagneten zwischen den Primärspulen in eindeutiger Weise als solche erkannt werden. Diese Anordnung ermöglicht daher den Einsatz solcher Positionsmeßstrecken an Teilstrecken eines sich bewegenden Elements, beispielsweise eines Kolbens in einem Zylinder, dessen Position nur im Bereich der Positionsmeßstrecke exakt erfaßt werden soll. Durch den Permanentmagneten wird dadurch nicht nur das Meßsignal erzeugt, sondern gleichzeitig die Begrenzung des Meßbereichs erfaßt. Der Einsatz von gegenüber der gesamten Bewegungsstrecke kürzeren Wegmeßsystemen führt zu einer Kosten-, Gewichts- und Volumenreduktion. Da die Länge des Wegmeßsystems nicht an die Länge der Gesamtbewegungsbahn angepaßt werden muß, wird auch die Flexibilität des Einsatzes erhöht. Mehrere solcher Positionsmeßstrecken können auch an gewünschten Teilstrecken der gesamten Bewegungsbahn angeordnet werden. So eignet sich eine solche Positionsmeßstrecke beispielsweise zur Ist-Wert-Erfasung bei der Endlagendämpfung eines Kolbens.

Durch die in den abhängigen Ansprüchen aufgeführten Maßnahmen sind vorteilhafte Weiterbildungen und Verbesserungen der im Anspruch 1 angegebenen Positionsmeßstrecke möglich.

Die Sekundärwicklung und die Primärwicklungen sind zweckmäßigerweise aufeinander oder nebeneinander auf einem weichen, magnetischen, langgestreckten Sensorkern angeordnet, der neben seiner Auswirkungen auf das Magnetfeld auch gleichzeitig als Halterung für die Wicklungen dient.

Zum Schutz der wenigstens aus den Spulen und dem Sensorkern bestehenden Anordnung ist diese in vorteilhafter Weise von einem Spulengehäuse aus elektrisch isolierendem Material umgeben.

Um ein autarkes, komplettes Meßstreckenelement zu erhalten, ist zweckmäßigerweise eine wenigstens die Auswerteschaltung für das sekundärseitige Meßsignal enthaltende Auswerteplatine entlang der Spulen angeordnet. Zusätzlich können die beiden Magnetfeldsensoren an einer wenigstens einen Teil der Bereichserkennungseinrichtung tragenden Sensorplatine angeordnet sein. Damit sind auch die elektronischen Komponenten in der Meßstrecke integriert, die somit eine kompakte und komplette Baueinheit darstellt. Ein wenigstens eine Platine und die in einem Spulengehäuse angeordnete Spule enthaltendes Außengehäuse wird mit einer Vergußmasse ausgegossen, um zum einen die räumliche Anordnung der Komponenten gegenseitig zu fixieren, und um eine wasser- und stoßgeschützte, kompakte Baueinheit zu erzielen.

Die Sekundärspule ist in vorteilhafter Weise mit einem Abtast- und Haltekreis verbunden, der von einer Impulserzeugerstufe synchron zu den primärseitigen Erregersignalen getriggert wird. Hierdurch erhält man bei einer Position des Permanentmagneten in der einen Hälfte der Meßstrecke positive und in der anderen Hälfte negative Signale, die sich leicht voneinander unterscheiden lassen. Ein die im Abtast- und Haltekreis festgehaltenen Signale in eine dazu proportionalen Strom umsetzende Umsetzstufe wird zweckmäßigerweise dann vorgesehen, wenn ein positionsabhängiger Ausgangsstrom für die Auswertung erforderlich ist. Bei einer Anordnung der Positionsmeßstrecke an der Außenseite eines Zylinders wird der Permanentmagnet zweckmäßigerweise am im Zylinderraum bewegbaren Kolben fixiert. Bei einem relativ zur Zylinderwandung verdrehbaren Kolben eignet sich hierzu vor allem ein Ringmagnet.

Als Magnetfeldsensoren eignen sich bistabile Sensoren, insbesondere Hall-Sensoren.

Ausführungsbeispiele der Erfindung sind in der Zeichnung dargestellt und in der nachfolgenden Beschreibung näher erläutert. Es zeigen:
- Figur 1: ein Längsschnitt durch eine Positionsmeßstrecke als erstes Ausführungsbeispiel der Erfindung,
- Figur 2: eine Querschnittsdarstellung gemäß der Schnittlinie A-A in Figur 1,
- Figur 3: ein Signaldiagramm zur Erläuterung des Auswertesignals auf der einen Hälfte der Meßstrecke,
- Figur 4: ein Signaldiagramm zur Erläuterung des Auswertesignals auf der anderen Hälfte der Meßstrecke und
- Figur 5: ein Blockschaltbild der zugeordneten Meßelektronik.

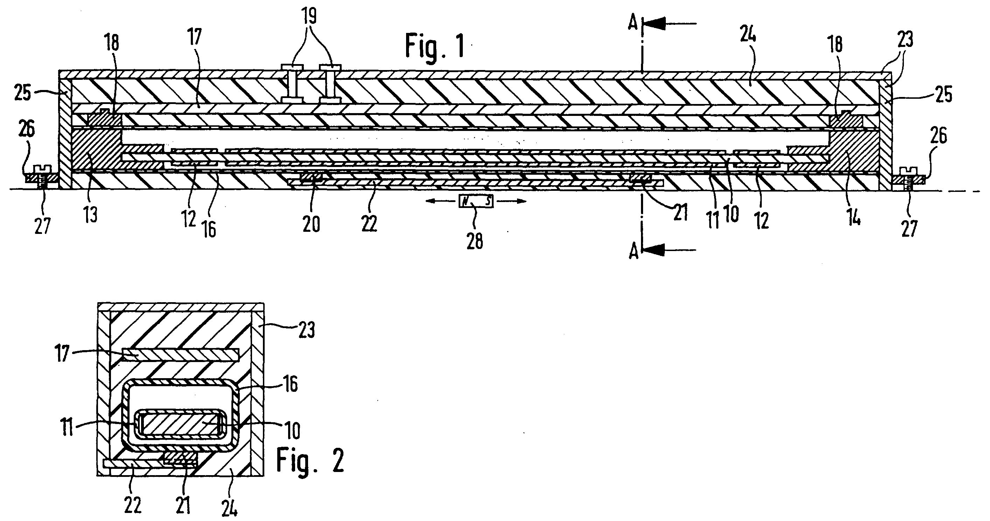

Bei dem in den Figuren 1 und 2 dargestellten ersten Ausführungsbeispiel der Positionsmeßstrecke sind auf einem langgestreckten weichmagnetischen Spulenkern 10 mit flachem, rechteckigem Querschnitt eine langgestreckte Sekundärwicklung 11 und zwei Primärwicklungen 12 an beiden Enden der Sekundärwicklung 11 aufgebracht. Die Primärwicklungen 12 können auch an den beiden Randbereichen der Sekundärwicklung 11 auf dieser oder unter dieser gewickelt sein.

Der Spulenkern 10 wird an seinen beiden Endbereichen von zwei Abschlußelementen 13, 14 gehalten, die aus Kunststoff, die jedoch zur Verbesserung des magnetischen Flusses auch aus weichmagnetischem Material bestehen können. Diese Anordnung 10 - 14 ist von einem dünnwandigen Kunststoffgehäuse 16 umschlossen, das an seinen beiden Endbereichen an den Abschlußelementen 13, 14 fixiert ist.

Oberhalb des Kunststoffgehäuses 16 ist eine Auswerteplatine 17 über Abstandshalter 18 am Kunststoffgehäuse 16 angeordnet. Diese Auswerteplatine 17 trägt in nicht dargestellter Weise die Auswerteschaltung für das Meßsignal und kann auch die für den Betrieb der Positionsmeßstrecke erforderlichen Signalerzeugerstufen tragen. Über zwei schematisch dargestellte, beispielsweise drehbare Einstellelemente 19 können Bauelemente, wie verstellbare Kondensatoren, Widerstände, Spulen und dergleichen auf der Auswerteplatine 17 eingestellt bzw. illustiert werden.

Eine mit zwei Hall-Sensoren 20, 21 bestückte Sensorplatine 22 ist an der Unterseite des Kunststoffgehäuses 16 so angeordnet, daß die beiden Hall-Sensoren 20, 21 den linearen, störungsfreien Bereich der Sekundärwicklung 11 begrenzen. Sie sind also jeweils in einem gewissen Abstand vom jeweiligen Ende der Sekundärwicklung 11 am Kunststoffgehäuse 16 angeordnet. Die Sensorplatine 22 trägt eine von den Hall-Sensoren 20, 21 gesteuerte Bereichserkennungsschaltung. Anstelle von Hall-Sensoren 20, 21 können auch andere magnetfeldempfindliche Elemente oder Sensoren eingesetzt werden, die insbesondere ein bistabiles Schaltverhalten aufweisen.

Die gesamte bisher beschriebene Anordnung wird nun in ein elektrisch leitfähiges, nicht ferromagnetisches Außengehäuse 23 mit U-förmigem Querschnitt eingesetzt, d. h., das Gehäuse ist auf Seiten der Hall-Sensoren 20, 21 offen. Nun wird die gesamte, in das Außengehäuse 23 eingesetzte Anordnung mit einer Vergußmasse 24 vergossen.

Stirnseitige, elektrisch leitfähige Wandungen 25 des Außen-gehäuses 23 besitzen Haltevorsprünge 26, mit deren Hilfe die beschriebene Positionsmeßstrecke mittels Schrauben 27 an der Außenseite eines Zylinders oder einer anderen Anordnung fixiert werden kann.

Wird nun ein Permanentmagnet 28 an der Unterseite der Positionsmeßstrecke, also auf Seiten der Hall-Sensoren 20, 21, in der Längsrichtung dieser Positionsmeßstrecke bewegt, so kann die Position dieses Permanentmagneten 28 erfaßt werden, wie im Zusammenhang mit Figur 7 noch näher erläutert wird. Dieser Permanentmagnet 28 kann im Falle einer Zylinder-Kolben-Anordnung am Kolben angebracht sein, z. B. in Form eines Ringmagneten.

Das den Spulenkern 10 und die Wicklungen 11, 12 enthaltende Kunststoffgehäuse kann selbstverständlich auch lediglich mit den beiden Hall-Sensoren 20, 21 versehen sein, wobei dann die erforderlichen elektronischen Bauteile separat untergebracht sind.

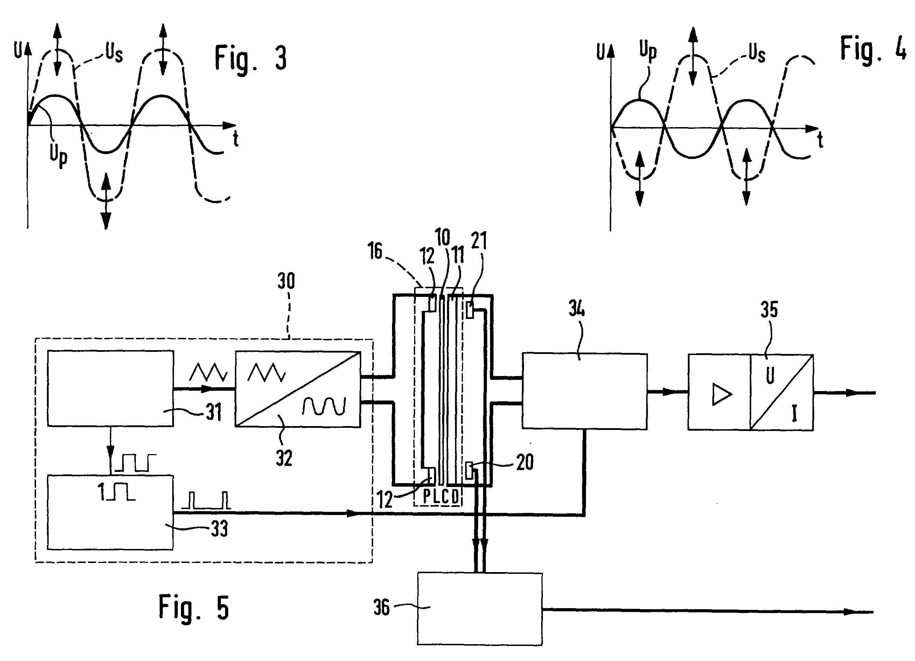

Gemäß Figur 5 weist eine Signalerzeugerstufe 30 einen Funktionsgenerator 31 auf, der eine Dreieckssignalfolge und eine dazu synchrone Rechteckssignalfolge erzeugt. Die Dreieckssignalfolge wird einem Dreieck-Sinus-Konverter 32 zugeführt, der daraus eine sinusförmige oder sinusartige Wechselspannung erzeugt, die an die Primärwicklungen 12 angelegt wird. Die Primärwicklungen sind dabei gemäß Figur 5 in Reihe geschaltet, jedoch gegensinnig gewickelt. Es ist selbstverständlich auch möglich, die Primärwicklungen bei gleichsinniger Wicklung gegensinnig zu beschalten. Weiterhin ist die Rechteckssignalfolge der Signalerzeugerstufe 30 einer monostabilen Schalt stufe 33 zugeführt, die daraus eine synchrone Impulsfolge mit kurzen Triggerimpulsen erzeugt.

Die in der Sekundärwicklung induzierte Spannung wird einem Abtast- und Haltekreis 34 zugeführt, der von der monostabilen Schaltstufe 33 getriggert wird und als phasenempfindlicher Gleichrichter dient. Dessen Ausgangssignal wird einem Spannungs-Strom-Wandler 35 mit integriertem Verstärker zugeführt.

Die Wirkungsweise dieser Anordnung wird nun im folgenden beschrieben. Der Permanentmagnet 28 erzeugt einen gesättigten Bereich an der jeweiligen Stelle des Spulenkerns 10 und bewirkt dadurch eine magnetische Auftrennung des Spulenkerns. Infolge der gegensinnigen magnetischen Erregung der Primärwicklungen 12 ist dadurch die Sekundärspannung 0, wenn sich der Permanentmagnet 28 in der Mitte der Sekundärwicklung 11 befindet. Bewegt er sich von dieser Mittenstellung aus nach links, so überwiegt immer mehr der rechts von ihm liegende Bereich der Sekundärwicklung, und die Amplitude der Sekundärspannung steigt synchron mit der Bewegung des Permanentmagneten an. Dies zeigt Figur 3 durch die gestrichelt dargestellte Sekundärspannung Us. Bewegt sich dagegen der Permanentmagnet von der Mittenstellung aus nach rechts, so überwiegt immer mehr der linke Bereich der Sekundärwicklung und es treten die in Figur 4 dargestellten Verhältnisse auf, d. h., die Sekundärspannung steigt ebenfalls an, jedoch um 180° zur Primärwicklung phasenverschoben. Die Triggersignale der monostabilen Schaltstufe 33 sind jeweils um 360° zueinander versetzt, wobei ihre Phasenlage so gewählt ist, daß sie bei den positiven Halbwellen der Sekundärspannung gemäß Figur 3 jeweils im Maximum und bei den negativen Halbwellen gemäß Figur 4 jeweils im Minimum auftreten. Dadurch werden im Abtast- und Haltekreis 34 bei einer Bewegung des Permanentmagneten 28 von der Mittenposition aus nach links ansteigende positive Spannungswerte und bei einer Verschiebung nach rechts absinkende negative Spannungswerte gespeichert. Diese werden im Spannungs-Strom-Wandler 35 verstärkt und in einen entsprechenden Strom umgewandelt. Die Umwandlung in einen entsprechenden Strom kann im Einzelfall auch entfallen, wenn anstelle eines positionsabhängigen Stroms eine positionsabhängige Spannung erwünscht ist.

Die Linearität des bei einer Bewegung des Permanentmagneten 28 erzeugten Sekundärsignals ist an den Randbereichen der Sekundärwicklung nicht mehr gegeben und wird durch Störeinflüsse getrübt. Der lineare Bereich der Sekundärwicklung 11 ist daher durch die beiden Hall-Sensoren 20, 21 begrenzt. Diese sind mit einer Bereichserkennungseinrichtung 36 verbunden, die nur dann ein Bereichssignal ausgangsseitig abgibt, wenn sich der Permanentmagnet 28 im Bereich zwischen diesen Hall-Sensoren 20, 21 befindet. Anstelle der Hall-Sensoren können auch andere (uniaxiale) bistabile, magnetische Sensoren verwendet werden. Diese sind mit dem Permanentmagneten 28 so abzustimmen, daß die radiale Komponente des Magnetfelds parallel zur sensorempfindlichen Achse liegt. Nur wenn ein Bereichssignal am Ausgang der Bereichserkennungseinrichtung 36 anliegt, wird das Meßsignal am Ausgang des Abtast- und Haltekreises 34 bzw. des Spannungs-Strom-Wandlers 35 als Positionssignal akzeptiert. Dies kann beispielsweise durch eine nicht dargestelte Fenster- oder Gatterschaltung realisiert werden.

Die Bereichserkennungseinrichtung 36 kann im einfachsten Falle aus einer bistabilen Speicherstufe bestehen, wobei in einer Initialisierungsphase zunächst der Permanentmagnet in einer bestimmten Richtung außerhalb der Positionsmeßstrecke bewegt wird und dann von dort zur Positionsmeßstrecke zurückbewegt wird. Dabei nimmt die bistabile Schalteinrichtung beim Überfahren des ersten Hall-Sensors eine erste Schaltstellung ein, die zu einem entsprechenden Bereichserkennungssignal führt. Jedes weitere Erreichen eines der beiden Hall-Sensoren führt dabei zur Umschaltung der bistabilen Schaltstufe und zur Abschaltung des Bereichserkennungssignals.

Die elektronischen Komponenten der Bereichserkennungseinrichtung 36 sind beispielsweise auf der Sensorplatine 22 angeordnet, während die Komponenten des Abtast- und Haltekreises 34 sowie des Spannungs-Strom-Wandlers 35 auf der Auswerteplatine 17 angeordnet sind. Zusätzlich können dort auch noch die Komponenten der Signalerzeugerstufe 30 angeordnet sein.

## Patentansprüche

1. Positionsmeßstrecke mit einer als Meßspule ausgebildeten langgestreckten Sekundärspule (11), an deren Endbereichen jeweils gegensinnig mit einer Wechselspannung beaufschlagbare Primärspulen (12) angeordnet sind, und mit einem entlang der Sekundarspule bewegbaren Permanentmagneten (28), dadurch gekennzeichnet, daß zwei Magnetfeldsensoren (20, 21) zwischen den Primärspulen (12) im Bereich der Sekundärspule (11) und in Längsrichtung beabstandet von deren Enden angeordnet sind, und daß eine mit den Magnetfeldsensoren (20, 21) verbundene, ein Meßsignal an der Sekundärspule (11) nur bei einer Position des Permanentmagneten (28) zwischen den Magnetfeldsensoren (20, 21) als Positionssignal wertende elektronische Bereichserkennungseinrichtung (36), vorhanden ist.

2. Positionsmeßstrecke nach Anspruch 1, dadurch gekennzeichnet, daß der durch die beiden Magnetfeldsensoren (20, 21) definierte Meßbereich für Positionssignale ein störsignalfreier, im wesentlichen linearer Bereich der Sekundärspule (11) ist.

3. Positionsmeßstrecke nach Anspruch 1 oder 2, dadurch gekennzeichnet, daß die Sekundärwicklung (11) und die Primärwicklungen (12) aufeinander oder nebeneinander auf einem weichmagnetischen langgestreckten Spulenkern (10) angeordnet sind.

4. Positionsmeßstrecke nach Anspruch 3, dadurch gekennzeichnet, daß die wenigstens aus den Spulen (11, 12) und dem Sensorkern (10) bestehende Anordnung von einem Spulengehäuse (16) aus elektrisch isolierendem Material umgeben ist.

5. Positionsmeßstrecke nach einem der vorhergehenden Ansprüche, dadurch gekennzeichnet, daß eine wenigstens die Auswerteschaltung für das sekundärseitige Meßsignal enthaltende Auswerteplatine (17) entlang der Spulen (11, 12) angeordnet ist.

6. Positionsmeßstrecke nach einem der vorhergehenden Ansprüche, dadurch gekennzeichnet, daß die beiden Magnetfeldsensoren (20, 21) an einer wenigstens einen Teil der Bereichserkennungseinrichtung (36) tragenden Sensorplatine (22) angeordnet sind.

7. Positionsmeßstrecke nach Anspruch 5 oder 6, dadurch gekennzeichnet, daß ein wenigstens eine Platine (17, 22) und die im Spulengehäuse (16) angeordneten Spulen (11, 12) enthaltendes Außengehäuse (23) aus elektrisch leitendem Material vorhanden ist, das mit einer Vergußmasse (24) ausgegossen ist.

8. Positionsmeßstrecke nach einem der vorhergehenden Ansprüche, dadurch gekennzeichnet, daß die Sekundärspule (11) mit einem Abtast- und Haltekreis (34) verbunden ist, der von einer Impulserzeugerstufe (33) synchron zu den primärseitigen Wechselspannungssignalen getriggert ist.

9. Positionsmeßstrecke nach Anspruch 8, dadurch gekennzeichnet, daß ein die im Abtast- und Haltekreis (34) festgehaltenen Signale in einen proportionalen Strom umsetzende Umsetzstufe (35) vorgesehen ist.

10. Positionsmeßstrecke nach einem der vorhergehenden Ansprüche, gekennzeichnet durch eine in einem Zylinder integrierte Anordnung oder eine Anordnung an der Außenseite eines Zylinders, in dessen Zylinderraum ein mit dem Permanentmagneten (28) versehener Kolben bewegbar ist.

11. Positionsmeßstrecke nach einem der vorhergehenden Ansprüche, dadurch gekennzeichnet, daß die Magnetfeldsensoren (20, 21) als bistabile Sensoren ausgebildet sind, insbesondere als Hall-Sensoren.

## Claims

1. Position measuring section with an elongated secondary coil (11) as measuring coil, with primary coils (12) which can be supplied in opposite directions with an alternating voltage located at its end areas, and with a permanent magnet (28) which can be moved along the secondary coil, characterized in that two magnetic field sensors (20, 21) are mounted between the primary coils (12) in the area of the secondary coil (11) and with longitudinal clearance from its ends, and that there is an electronic range detection device (36) linked to the magnetic field sensors (20, 21) and evaluating a measuring signal at the secondary coil (11) as a position signal only when the permanent magnet (28) is positioned between the magnetic field sensors (20, 21).

2. Position measuring section according to claim 1, characterized in that the measuring range for position signals defined by the two magnetic field sensors (20, 21) is a substantially linear zone of the secondary coil (11) which is free from unwanted signals.

3. Position measuring section according to claim 1 or 2, characterized in that the secondary coil (11) and the primary coils (12) are mounted on top of or next to one another on a soft-magnetic elongated core (10).

4. Position measuring section according to claim 3, characterized in that the assembly comprising at least the coils (11, 12) and the sensor core (10) is surrounded by a coil housing (16) of electrically-insulating material.

5. Position measuring section according to any of the preceding claims, characterized in that an evaluation board (17) containing at least the evaluation circuit for the secondary-side measuring signal is mounted along the coils (11, 12).

6. Position measuring section according to any of the preceding claims, characterized in that the two magnetic field sensors (20, 21) are mounted on a sensor board (22) carrying at least one part of the range detection device (36).

7. Position measuring section according to claims 5 or 6, characterized in that there is an outer casing (23) of electrically-conductive material, cast with an encapsulating material (24) and containing one or more boards (17, 22) and the coils (11, 12) located in the coil housing (16).

8. Position measuring section according to any of the preceding claims, characterized in that the secondary coil (11) is linked to a sample-and-hold circuit (34) which is triggered by a pulse generator stage (33) synchronously with the primary-side alternating voltage signals.

9. Position measuring section according to claim 8, characterized in that there is provided a converter stage (35) which converts into a proportional current the signals detected in the sample-and-hold circuit (34).

10. Position measuring section according to any of the preceding claims, characterized by an assembly integrated in a cylinder, or an assembly on the outside of a cylinder, in the cylinder chamber of which moves a piston provided with a permanent magnet (28).

11. Position measuring section according to any of the preceding claims, characterized in that the magnetic field sensors (20, 21) are in the from of bistable sensors, in particular Hall sensors.

## Revendications

1. Section de mesure de position comportant une bobine secondaire (11) allongée, conformée en bobine de mesure, et des bobines primaires (12), pouvant recevoir une tension alternative de sens opposé, disposées dans chacune des zones d'extrémité de la bobine primaire, et comportant un aimant permanent (28), déplaçable le long de la bobine secondaire, caractérisée en ce que deux capteurs de champ magnétique (20, 21) sont disposés entre les bobines primaires (12) dans la région de la bobine secondaire (11) et espacés de ses extrémités dans la direction longitudinale, et en ce qu'il est prévu un dispositif de reconnaissance de zone (36) électronique, relié aux capteurs de champ magnétique (20, 21), validant un signal de mesure sur la bobine secondaire (11), en tant que signal de position, uniquement dans le cas où l'aimant permanent (28) est positionné entre les capteurs de champ magnétique (20, 21).

2. Section de mesure de position selon la revendication 1, caractérisée en ce que la zone de mesure pour les signaux de position, définie par les deux capteurs de champ magnétique (20, 21), est une zone de la bobine secondaire (11) sensiblement linéaire, sans signal parasite.

3. Section de mesure de position selon la revendication 1 ou 2, caractérisée en ce que l'enroulement secondaire (11) et les enroulements primaires (12) sont disposés superposés ou juxtaposés sur un noyau de bobine (10) allongé en matériau magnétique doux.

4. Section de mesure de position selon la revendication 3, caractérisée en ce que le dispositif constitué au moins des bobines (11, 12) et du noyau de capteur (10), est entouré par un boîtier de bobine (16) fait d'un matériau électriquement isolant.

5. Section de mesure de position selon l'une des revendications précédentes, caractérisée en ce qu'une platine d'interprétation (17), contenant au moins le circuit d'interprétation pour le signal de mesure côté secondaire, est disposée le long des bobines (11, 12).

6. Section de mesure de position selon l'unes des revendications précédentes, caractérisée en ce que les deux capteurs de champ magnétique (20, 21) sont disposés sur une platine de capteur (22) portant au moins une partie du dispositif de reconnaissance de zone (36).

7. Section de mesure de position selon la revendication 5 ou 6, caractérisée en ce qu'est prévu un boîtier extérieur (23) en matériau électriquement conducteur, contenant au moins une platine (17, 22) et les bobines (11, 12) disposées dans le boîtier de bobine (16), lequel boîtier extérieur est surmoulé avec une masse de scellement (24).

8. Section de mesure de position selon l'une des revendications précédentes, caractérisée en ce que la bobine secondaire (11) est reliée à un circuit échantillonneur-bloqueur (34), qui est piloté par un étage de génération d'impulsions (33), de manière synchrone avec les signaux de tension alternatifs côté primaire.

9. Section de mesure de position selon la revendication 8, caractérisée en ce qu'est prévu un étage de conversion (35) convertissant les signaux retenus dans le circuit échantillonneur-bloqueur (34), en un courant proportionnel.

10. Section de mesure de position selon l'une des revendications précédentes, caractérisée par une disposition intégrée dans un cylindre ou une disposition sur le côté extérieur d'un cylindre, dans la chambre duquel est déplaçable un piston pourvu de l'aimant permanent (28).

11. Section de mesure de position selon l'une des revendications précédentes, caractérisée en ce que les capteurs de champ magnétique (20, 21) sont conformés en capteurs bistables, en particulier en capteurs de Hall.
